# EUROPEAN PATENT APPLICATION

(11) **EP 4 588 712 A1**
(43) Date of publication of application: **23.07.2025**
(21) Application number: 24152621.9
(22) Date of filing: 18.01.2024
(51) Int. Cl.: B60L 53/16, B60L 53/18, B60L 53/302, H01R 9/24, H01R 13/66

(54) **CONNECTOR FOR AN ELECTRIC VEHICLE**

(71) Applicant: ABB E-mobility B.V., 2629 JG Delft (NL)
(72) Inventor: Bech, Lars, 3119JA Schiedam (NL); Lengyel, Janka, 2564PS The Hague (NL)
(74) Representative: Zimmermann & Partner Patentanwälte mbB

(57) **Abstract**

A connecting element configured to connect a charging wire of an electric vehicle supply equipment, EVSE, to an electric vehicle, EV, comprising a contact element configured to establish an electrical contact with a counter contact element of a counter connecting element for electrically connecting the charging wire of the EVSE to the EV, wherein the contact element is configured to carry a charging current flowing between the contact element and the counter contact element during charging of the EV; and a heat pipe; wherein at least a part of the heat pipe is integrated into the contact element so that a wall portion of the heat pipe carries at least part of the charging current.

## Description

### TECHNICAL FIELD

Embodiments of the present disclosure relate to a connecting element configured to connect a charging wire of an electric vehicle supply equipment (EVSE) to an electric vehicle (EV). Further embodiments relate to an electric vehicle supply equipment comprising a connecting element and to a method of charging an electric vehicle using a connecting element.

### BACKGROUND

Charging electric vehicles with a high power can lead to temperature rises in components of the charging equipment due to charging losses. In particular contact elements that establish an electric contact between a charging wire of the EVSE and the EV may heat during a charging process due to resistive heating. This can considerably influence the performance of the charging process.

### DISCLOSURE OF THE INVENTION

In the view of the foregoing, the present disclosure is directed to a connecting element configured to connect a charging wire of an electric vehicle supply equipment to an electric vehicle, an electric vehicle supply equipment and a method of charging an electric vehicle that provide an improved heat control.

According to an aspect of the present disclosure, a connecting element configured to connect a charging wire of an electric vehicle supply equipment (EVSE) to an electric vehicle (EV) is provided. The connecting element comprises a contact element configured to establish an electrical contact with a counter contact element of a counter connecting element for electrically connecting the charging wire of the EVSE to the EV, wherein the contact element is configured to carry a charging current flowing between the contact element and the counter contact element during charging of the EV; and a heat pipe; wherein at least a part of the heat pipe is integrated into the contact element so that a wall portion of the heat pipe carries at least part of the charging current.

According to another aspect of the present disclosure, an electric vehicle supply equipment comprising a connecting element according to any of the embodiments described herein is provided.

According to another aspect of the present disclosure, a method of charging an EV using the connecting element of any of the embodiments described herein is provided.

According to some embodiments, the connecting element may be a connector that is configured to connect a charging wire of an EVSE to an EV. In particular, the connecting element may be mechanically and/or electrically connected to the EVSE via the charging wire. Exemplarily, considering the connection between the charging wire of the EVSE and the EV as a plug-socket-connection, the connecting element may be a plug or connector, in particular a plug or connector that is mechanically inserted into a socket or inlet.

According to some embodiments, the connecting element may be an inlet that is mechanically and/or electrically connected to the EV, in particular the connecting element may be a part of the EV. Exemplarily, considering the connection between the charging wire of the EVSE and the EV as a plug-socket-connection, the connecting element may be a socket or inlet, in particular a socket or inlet into which a suitable plug or connector may be inserted.

According to some embodiments, the electric vehicle may be a land vehicle, a seaborne vehicle or an airborne vehicle. Land vehicles may comprise road vehicles, such as cars, motorcycles, buses or trucks; or rail vehicles, such as locomotives, electric multiple units or trams. Seaborne vehicles may comprise vehicles for use on inland waters or seagoing vehicles. Exemplarily, seaborne vehicles may comprise cruise ships, ferries, cargo ships, warships or support vessels. Airborne vehicles may comprise fixed-wing aircraft or rotary wing aircraft, exemplarily planes, helicopters, drones or air taxis, in particular eVTOL. According to some embodiments, the electric vehicle may be solely powered by an electric motor. According to other embodiments, the electric vehicle may be a hybrid vehicle powered by an electric motor and an additional non-electric motor. According to some embodiments, the electric vehicle may be an internal combustion engine vehicle and the vehicle may be supported with electric power via the connecting element if the internal combustion engine does not provide electric power to consumers on the vehicle, exemplarily a seaborne vehicle at a port, a rail vehicle at a terminus or an airborne vehicle at an airport.

According to some embodiments, the counter connecting element is configured to establish a mechanical contact with the connecting element. In particular the counter connecting element and the connecting element may form a plug-socket-connection.

According to some embodiments, the connecting element and the counter connecting element follow an industrial standard to ensure compatibility. Exemplarily, the connecting element and the counter connecting element may be plug and socket (charger and inlet) of an CCS, NACS, CHAdeMO, GB/T or MCS standardized charging connector system. In some embodiments, the connecting element and the counter connecting element may be plug and socket of a megawatt charging system.

Exemplarily, for a CCS standardized charging connector system, the connecting element may be a charging connector. The connecting element comprises a tulip configured to receive a pin of the counter connecting element. The tulip has a geometry that is substantially a hollow cylinder. the hollow cylinder may comprise a heat pipe, in particular a heat pipe that has a hollow cylindric geometry, or a plurality of heat pipes. In some embodiments, the connecting element may be part of the electric vehicle inlet. In this configuration, the connecting element comprises a pin. The pin may comprise a heat pipe.

Exemplarily, for an NACS or an MCS standardized charging connector system, the connecting element may be a charging connector. The connecting element comprises a tulip with a central pin. The tulip has a geometry that is substantially a hollow cylinder. the hollow cylinder may comprise a heat pipe, in particular a heat pipe that has a hollow cylindric geometry, or a plurality of heat pipes. Alternatively or additionally, the pin may comprise a heat pipe. In some embodiments, the connecting element may be part of the electric vehicle inlet. In this configuration, the connecting element comprises a tulip. Walls of the tulip may comprise a heat pipe or a plurality of heat pipes.

Exemplarily, for a GB/T standardized charging connector system, the connecting element may be a charging connector. The connecting element comprises a pin. The pin may comprise a heat pipe. In some embodiments, the connecting element may be part of the electric vehicle inlet. In this configuration, the connecting element comprises a tulip. Walls of the tulip may comprise a heat pipe or a plurality of heat pipes.

According to some embodiments, the EVSE is configured for supplying electrical power to an EV. The EVSE may be configured to provide alternating current (AC) and/or direct current (DC) to the EV. According to some embodiments, the EVSE may comprise control equipment to control charging parameters, in particular an electrical current and/or a voltage. The EVSE may comprise equipment to control the temperature of, particularly to cool, components of the EVSE, exemplarily the charging wire and/or the connecting element and/or the counter connecting element.

According to some embodiments, the contact element configured to establish an electrical contact with a counter contact element is in a mechanical contact with the counter contact element, in particular when the connecting element is in a mechanical contact with the counter connecting element. According to some embodiments, the charging current may flow via the electrical contact from the EVSE to the EV. According to some embodiments, the contact element and/or the counter contact element may comprise a flexible element, exemplarily a spring element, configured to establish a mechanical and/or electrical contact between the contact element and the counter contact element.

According to some embodiments, the contact element, in particular the heat pipe, defines an axis, in particular by the geometry of the contact element. The axis may be an axis of symmetry, in particular of a rotational symmetry. In some embodiments, the contact element may substantially have a blade or bar shape. In particular the blade or bar shape may define the axis of symmetry, exemplary an axis of mirror-symmetry. In some embodiments, the axis may be an axis of the predominant geometrical extension of the contact element. According to some embodiments, the counter contact element defines a second axis and the second axis is substantially parallel to the axis of the contact element.

According to some embodiments, the contact element, in particular the heat pipe, and the counter contact element, when brought in contact, may form an area of mechanical and electrical contact. The area of mechanical and electrical contact comprises portions of the contact element that are in a mechanical and electrical contact with the counter contact element. In some embodiments, the area of mechanical and electrical contact may only consist of portions of the contact element that are in a mechanical contact and through which at least 10%, 25%, 50%, 70%, 80%, 85%, 90%, 95% or 99% of the charging current is flowing. The area of mechanical and electrical contact may also be considered as a current-transmitting part of the contact element, in particular of the heat pipe. In some embodiments the area of mechanical and electrical contact may comprise the spring element. In some embodiments, the spring element and the area of mechanical and electrical contact may be in a staggered configuration along the axis. In some embodiments the spring element may be closer to a wire-facing end of the contact element than the area of mechanical and electrical contact. In some embodiments the spring element may be closer to a countercontact element-facing end of the contact element than the area of mechanical and electrical contact. In some embodiments the area of mechanical and electrical contact may be closer to the wire-facing end of the contact element than the spring element.

According to some embodiments, at least part of the area of mechanical and electrical contact may be substantially parallel to the axis of the contact element, in particular the heat pipe. Exemplarily, for a substantially cylindrical contact element, at least part of the area of mechanical and electrical contact may be on the cylinder barrel.

According to some embodiments, the spring element extends along the length of the heat pipe. In some embodiments, the spring element and the heat pipe is in a staggered configuration along the axis. In some embodiments, a counter-connecting-element-facing end of the heat pipe is closer to the counter-connecting-element-facing end of the contact element than the counter-connecting-element-facing end of the spring element. In some embodiments, a counter-connecting-element-facing end of the spring element is closer to the counter-connecting-element-facing end of the contact element than the counter-connecting-element-facing end of the heat pipe.

According to some embodiments, the contact element may comprise a pin that extends outward from the connecting element, in particular from isolating portions of the connecting element. The contact element may be considered as a male part of the connection of the contact element with the counter contact element. In some embodiments, the contact element may comprise a female contact element configured to receive a pin.

According to some embodiments, the contact element is electrically connected to the charging wire of the EVSE. According to other embodiments, the contact element is electrically connected to a battery and/or an electric grid of the EV.

According to some embodiments, the contact element comprises a conducting material, particularly copper. In some embodiments, the contact elements comprise a coating with another conducting material, exemplarily silver or gold, particularly to improve the durability of the contact element and/or to improve the electrical conductivity.

According to some embodiments, the heat pipe is integrated into the contact element. In particular, the wall portion of the heat pipe is integrated into the contact element such that the wall portion of the heat pipe carries at least part of the charging current. In some embodiments, the wall portion of the heat pipe carries at least 10%, 25%, 50%, 75%, 85%, 90%, 95% or 99% of the charging current. In some embodiments, the wall of the heat pipe may be in a mechanical contact, in particular in a direct mechanical contact, with the counter contact element.

In some embodiments, the heat pipe may define the geometry of the contact element, in particular the geometry of the pin. Exemplarily, the contact element may comprise the heat pipe with a substantially uniform coating, particularly with a protective coating.

In some embodiments, the contact element and the heat pipe is one piece. In particular, the pin and the heat pipe may be one piece.

In some embodiments, the heat pipe comprises an evaporator, in particular configured to evaporate a working liquid. The evaporator may be considered as the portion of the heat pipe configured to absorb external heat to evaporate the working liquid. The evaporator may be in a thermal contact to a higher temperature part of the contact element, in particular to the area of mechanical and electrical contact. In particular at high currents, heat may be generated due to resistive heating. The heat may be absorbed by the evaporator of the heat pipe, particularly to evaporate the working liquid. This allows to advantageously remove excess heat, particularly occurring at high charging powers, from the contact element and/or the counter contact element.

In some embodiments, the connecting element comprises a heat sink. The heat sink may be in a thermal contact with the heat pipe, in particular with a condensing portion of the heat pipe. This may advantageously allow to further remove excess heat from the connecting element and to improve the efficiency of the heat pipe. In some embodiments, the heat sink may comprise an active heat sink. In particular, the heat sink may be tempered by the EVSE, in particular by a cooling fluid. In some embodiments, the heat sink comprises a thermoelectric element, in particular a Peltier thermoelectric cooling element. In some embodiments, the heat sink may comprise a fan. In some embodiments, the heat sink may comprise a passive heat sink. In particular, the heat sink may comprise fins or a grill. In some embodiments, the heat sink may comprise a phase change material and/or a nanostructured coating configured to increase a heat exchange. In some embodiments, the heat sink may comprise a thermally conductive material, exemplarily a thermally conductive silicone material, applied at least in part around the heat pipe, a process that may also be described as potting.

In some embodiments, the heat pipe comprises ammonia, alcohol or water as the working liquid. In some embodiments, the heat pipe comprises a casing with a wall of the heat pipe. At least part of the wall of the heat pipe may comprise copper. In some embodiments, at least part of the casing of the heat pipe, in particular of the wall of the heat pipe, is configured to conduct an electric current. In some embodiments, the wall of the heat pipe, in particular the wall portion carrying at least part of the charging current, may have a thickness of at least 0.1 mm, 0.2 mm, 0.3 mm, 0.5 mm or 1 mm and of at most 1.5 mm, 2 mm, 3 mm, 5 mm or 10 mm. The wall of the heat pipe may have a distance to the working liquid of the heat pipe of at most 0.1 mm, 0.2 mm, 0.3 mm, 0.5 mm, 1 mm, 2 mm, 5 mm or 10 mm.

In some embodiments, the evaporator of the heat pipe is configured to have a distance of at most 0.5 mm, 1 mm, 2 mm, 3 mm, 4 mm, 5 mm, 7 mm, 10 mm, 20 mm, 30 mm, 50 mm, 75 mm or 100 mm to the area of mechanical and electrical contact. This may advantageously allow to provide a good heat removal from a heat source, in particular of heat occurring due to resistive heating. Exemplarily, a smaller distance improves the heat transfer from the area of mechanical and electrical contact to evaporator of the heat pipe. A larger distance may be advantageous for an improved mechanical stability of the contact element.

According to some embodiments, the contact element and the heat pipe is one piece. In some embodiments, the contact element and the wall portion of the heat pipe is one piece. The contact element and the heat pipe may also be considered as being one piece if a coating is present on the wall portion of the heat pipe, in particular on the area of mechanical and electrical contact.

In some embodiments, the connecting element further comprises a thermometer. The thermometer may be configured to measure a temperature of the heat pipe. A temperature of the heat pipe may comprise any temperature of the heat pipe, in particular a temperature at the condensing portion of the heat pipe or a temperature at the evaporator. The thermometer may be inserted into the heat pipe or may be attached on a wall of the heat pipe. The thermometer may be in a thermal contact with the heat pipe, in particular via a thermal conductor.

In some embodiments, the connecting element comprises a temperature determining unit. The temperature determining unit may be configured to determine an estimated temperature of a part of the connecting element, in particular of the heat pipe, more in particular of a current-transmitting part of the heat pipe. In some embodiments, the temperature determining unit determines the estimated temperature from the temperature of the heat pipe measured by the thermometer. In particular, the temperature determining unit may determine the estimated temperature from the temperature measured by the thermometer based on a pre-determined conversion factor or a look-up table. In some embodiments, the temperature determining unit may determine the estimated temperature by calculating the estimated temperature from the temperature measured, exemplarily by a simulation and/or a theoretical model.

In some embodiments, the temperature of the heat pipe measured by the thermometer or the estimated temperature determined by the temperature determining unit may be transmitted to the EVSE. The measured temperature or the estimated temperature may be used by the EVSE to control a cooling of the heat pipe, exemplarily by increasing or reducing a flow of the cooling fluid or a temperature of the cooling fluid. In some embodiments, the EVSE may use the measured temperature or the estimated temperature to control parameters of the charging process, exemplarily the EVSE may control the power of the charging process. Exemplarily, the EVSE may compare the measured temperature or the estimated temperature with a standard temperature and decrease the power of the charging process if the measured temperature or the estimated temperature exceeds the standard temperature. In some embodiments, the EVSE may stop the charging process if a pre-defined temperature is exceeded. The pre-determined temperature may be the maximum temperature for a safe operation of the contact element. Controlling the charging process using the measured or estimated temperature may advantageously allow to improve the efficiency and/or safety of the charging process, in particular by avoiding an overheating of the contact element and/or of the counter contact element. Cooling the contact element and/or the counter contact element by the heat pipe may advantageously allow to transmit higher currents without overheating of the contact element.

In some embodiments, the EVSE may comprise a network interface for connecting the EVSE to a data network, in particular a global data network. The data network may be a TCP/IP network such as Internet. In some embodiments, the temperature of the heat pipe measured by the thermometer or the estimated temperature determined by the temperature determining unit may be transmitted via the network interface to distributed storage units such as a Cloud. The temperature of the heat pipe measured by the thermometer or the estimated temperature determined by the temperature determining unit may be analyzed by a centralized analyzing unit. In some embodiments, the EVSE may receive modified standard temperatures and/or modified pre-defined temperatures from the distributed storage unit to modify the control of the charging process.

In some embodiments, the heat pipe, in particular the current-transmitting part of the heat pipe, exemplarily the wall portion of the heat pipe, is configured to transmit an electrical current of at least 5 A, 10 A, 20 A, 30 A, 50 A, 75 A, 100 A, 150 A, 200 A, 375 A, 500 A, 1 kA, 2 kA, 3 kA, 5 kA, 10 kA, 15 kA or 20 kA.

The connecting element may be part of an electric vehicle supply equipment, exemplarily of a charging station for charging an electric vehicle. The EVSE may comprise a control unit that controls the charging process. In some embodiments, the control unit may receive the measured or estimated temperatures and may control the charging process at least in part using the measured or estimated temperature of the heat pipe. The EVSE may comprise a cooling fluid support structure, in particular a cooling circuit, that may provide a cooling fluid to cool the heat pipe.

The connecting element may be used to charge an electric vehicle. In particular the connecting element and the counter connecting element may be brought into mechanical and electrical contact. The EV may be charged by the EVSE and the heat pipe may temper, in particular cool, the contact element of the connecting element. In some embodiments, both the connecting element and the counter connecting element may comprise a heat pipe.

### BRIEF DESCRIPTION OF THE DRAWINGS

The accompanying drawings relate to embodiments of the disclosure and are described in the following:
- FIG 1a: schematically illustrates a connecting element and a corresponding counter connecting element according to the embodiments described herein;
- FIG 1b: schematically illustrates an alternative connecting element and corresponding counter connecting element according to the embodiments described herein;
- FIG 1c: schematically illustrates the connecting element and the corresponding counter connecting element of Fig. 1a being in mechanical and electrical contact;
- FIG 2a: schematically illustrates the connecting element of Fig. 1a with more details;
- FIG 2b: schematically illustrates an alternative connecting element according to the embodiments described herein;
- FIG 2c: schematically illustrates an alternative connecting element according to the embodiments described herein;
- FIG 2d: schematically illustrates an alternative connecting element according to the embodiments described herein;
- FIG 2e: schematically illustrates an alternative connecting element according to the embodiments described herein;
- FIG 3a: schematically illustrates an alternative connecting element according to the embodiments described herein;
- FIG 3b: schematically illustrates an alternative connecting element according to the embodiments described herein;
- FIG 3c: schematically illustrates an alternative connecting element according to the embodiments described herein;
- FIG 4a: schematically illustrates an alternative connecting element and corresponding counter connecting element according to the embodiments described herein;
- FIG 4b: schematically illustrates the connecting element and the corresponding counter connecting element of Fig. 4a being in mechanical and electrical contact;
- FIG 4c: schematically illustrates an alternative connecting element and corresponding counter connecting element according to the embodiments described herein.

### DETAILED DESCRIPTION OF EMBODIMENTS

Reference will now be made in detail to the various embodiments of the disclosure, one or more examples of which are illustrated in the figures. Generally, only the differences with respect to individual embodiments are described. Each example is provided by way of explanation of the disclosure and is not meant as a limitation of the disclosure. Further, features illustrated or described as part of one embodiment can be used on or in conjunction with other embodiments to yield a further embodiment. It is intended that the description includes such modifications and variations.

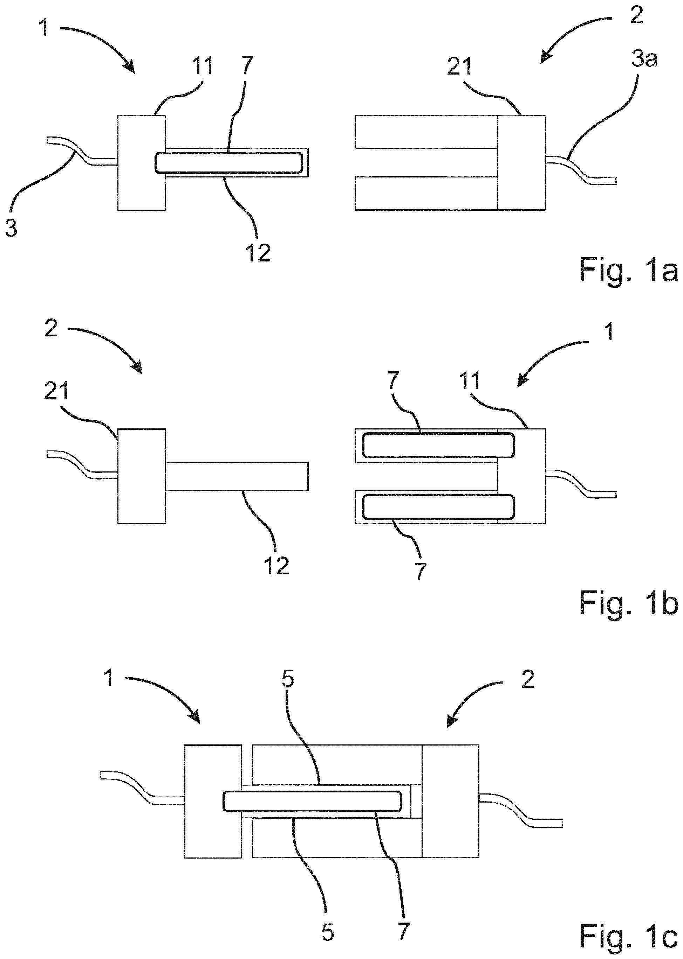

Fig 1a schematically illustrates a connecting element 1 and a counter connecting element 2 in a sectional view. The connecting element 1 is connected to a charging wire 3. The connecting element 1 comprises a contact element 11. The contact element 11 comprises a cylindrical pin (12) and a heat pipe 7. In some embodiments, the heat pipe 7 has a substantially cylindrical geometry. In some embodiments, the heat pipe 7 has a blade or bar shape. The heat pipe 7 extends along an axis, particularly along a symmetry axis of the heat pipe 7. The geometry of the protruding part of the contact element 11, in Fig 1a the pin 12, substantially follows the geometry of the heat pipe 7. The counter connecting element 2 comprises a counter contact element 21 with a geometry configured for receiving the contact element 11. In particular, the counter contact element 21 comprises a recess to receive the pin 12 of the contact element 11. Part of the counter contact element 21 substantially has the form of a hollow cylinder. The counter connecting element 1 is connected to a second charging wire 3a. The charging wire 3 and the second charging wire 3a may connect the connecting element 1 to an electricity supply of an EVSE and the counter connecting element 3a to an electric grid of an electric vehicle or may connect the connecting element 1 to the electric grid of the electric vehicle and the counter connecting element 3a to the electricity supply of the EVSE.

Fig 1b schematically illustrates a connecting element 1 and a counter connecting element 2 according to an alternative embodiment in a sectional view. The connecting element 1 comprises a contact element 11. A part of the contact element 11 substantially has a geometry of a hollow cylinder. A wall of the hollow cylinder comprises a heat pipe 7. In some embodiments, the wall of the hollow cylinder comprises a plurality of heat pipes 7. The counter connecting element 2 comprises a counter contact element 21 with a pin 12. The pin 12 has a substantially cylindrical geometry and is configured to be received by the hollow cylinder of the connecting element 1.

Fig 1c schematically illustrates in a sectional view the connecting element and the corresponding counter connecting element of Fig. 1a being in mechanical and electrical contact. The pin with the heat pipe 7 of the connecting element 1 is inserted into the hollow cylinder of the counter connecting element 2. Side walls of the pin and of the hollow cylinder are in a mechanical and electrical contact. An area 5 of mechanical and electrical contact between the contact element of the connecting element 1 and the counter contact element of the counter connecting element 2 is substantially parallel to an axis of the contact element, in particular to the axis of the heat pipe. The wall of the heat pipe 7 is in proximity to the area 5 of mechanical and electrical contact.

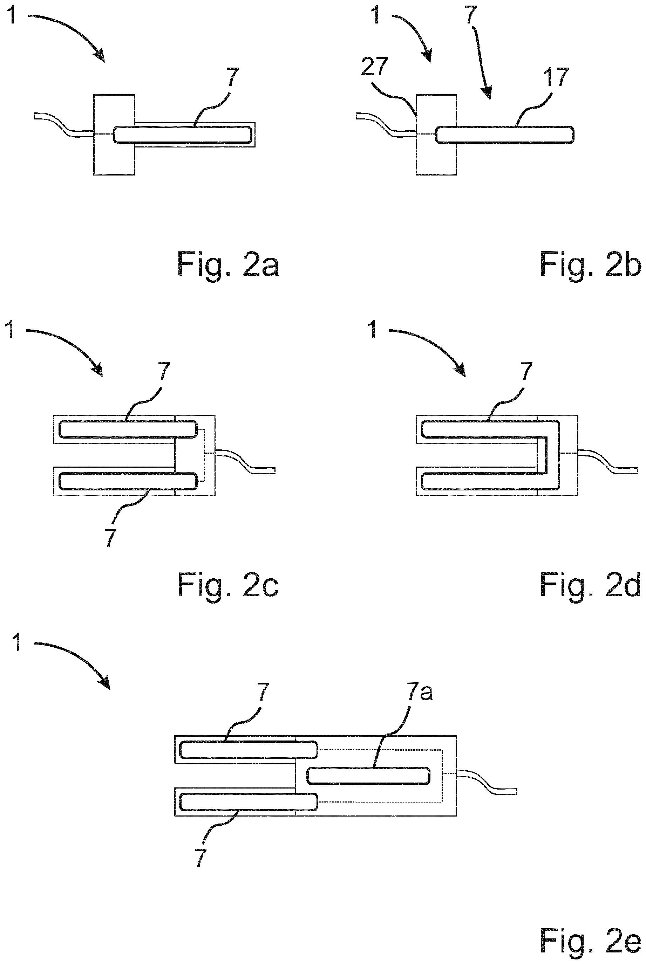

Fig 2a schematically illustrates the connecting element of Fig 1a with additional details. In particular, the heat pipe 7 is electrically connected to the charging wire. The wall portion of the heat pipe 7 is configured to transmit the electrical current.

Fig 2b schematically illustrates an alternative connecting element according to an alternative embodiment in a sectional view. The connecting element 1 comprises a heat pipe 7. The wall portion 17 of the heat pipe 7 is at the surface of the connecting element 1. The contact element and the wall portion 17 of the heat pipe 7 is one piece. The heat pipe is mechanically supported by a support structure 27.

Fig 2c schematically illustrates the connecting element 1 of Fig 1b with additional details. In particular, the heat pipe 7 is electrically connected to the charging wire. The wall portion of the heat pipe 7 is configured to transmit the electrical current. The heat pipe 7 may comprise a plurality of singular heat pipes 7, particularly with each heat pipe 7 being connected to the charging wire.

Fig 2d schematically illustrates an alternative connecting element 1 according to an alternative embodiment in a sectional view. The connecting element 1 comprises a heat pipe 7 in the wall of the hollow cylinder. The heat pipe 7 has a geometry of a hollow cylinder. The heat pipe is connected to the charging wire.

Fig 2e schematically illustrates an alternative connecting element 1 according to an alternative embodiment in a sectional view. The connecting element 1 comprises a heat pipe 7 in the wall of the hollow cylinder. The connecting element 1 comprises an additional heat pipe 7a. The additional heat pipe 7a is configured to be thermally coupled to the heat pipe 7. The additional heat pipe 7a may remove heat from the heat pipe 7. This may be particularly advantageous for thin walls of the hollow cylinder and thin heat pipes 7, in particular to more efficiently remove the heat from the thin walls of the hollow cylinder.

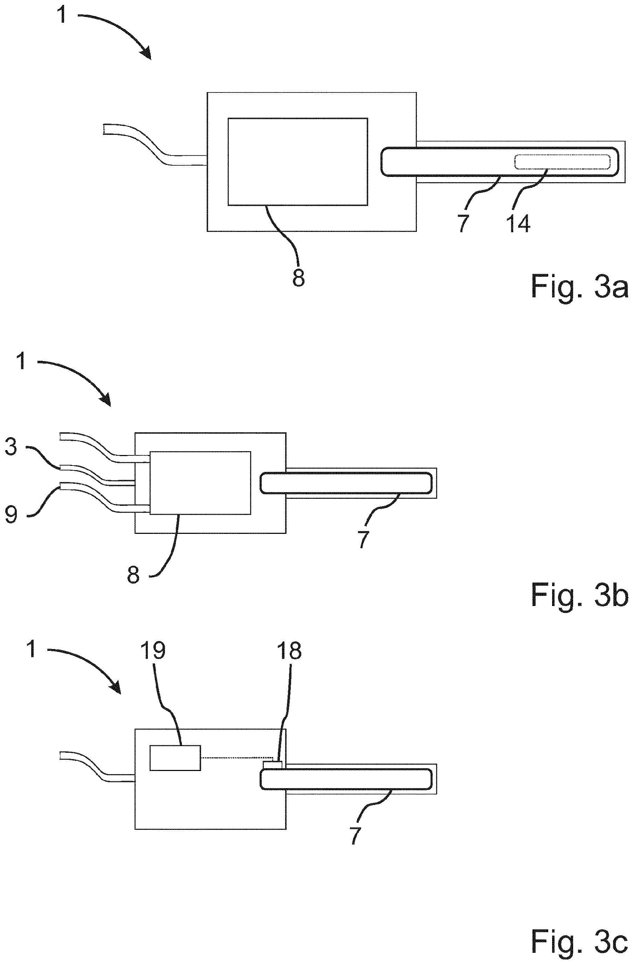

Fig 3a schematically illustrates an alternative connecting element 1 according to an alternative embodiment in a sectional view. The connecting element comprises a heat sink 8. The heat pipe 7 of the connecting element 1 comprises an evaporator 14. The evaporator 14 is in proximity to the wall portion of the heat pipe 7 and to the area of mechanical and electrical contact. The heat pipe 7 is in thermal contact to the heat sink 8. Heat from the heat pipe 7 can be transferred to the heat sink 8.

Fig. 3b schematically illustrates an alternative connecting element 1 according to an alternative embodiment in a sectional view. In addition to the embodiment shown in Fig 3a, the heat sink 8 is connected to a cooling fluid supply 9 that provides an integration to a cooling fluid circuit, in particular from an EVSE base station, to cool the heat sink.

Fig. 3c schematically illustrates an alternative connecting element 1 according to an alternative embodiment in a sectional view. In addition to the embodiment of Fig 1a, the connecting element 1 comprises a thermometer 18 attached to the heat pipe, in particular to a condensing portion of the heat pipe 7. The thermometer 18 is connected to a temperature determining unit 19 that is configured to determine an estimated temperature of the heat pipe, in particular of a current-transmitting part of the heat pipe.

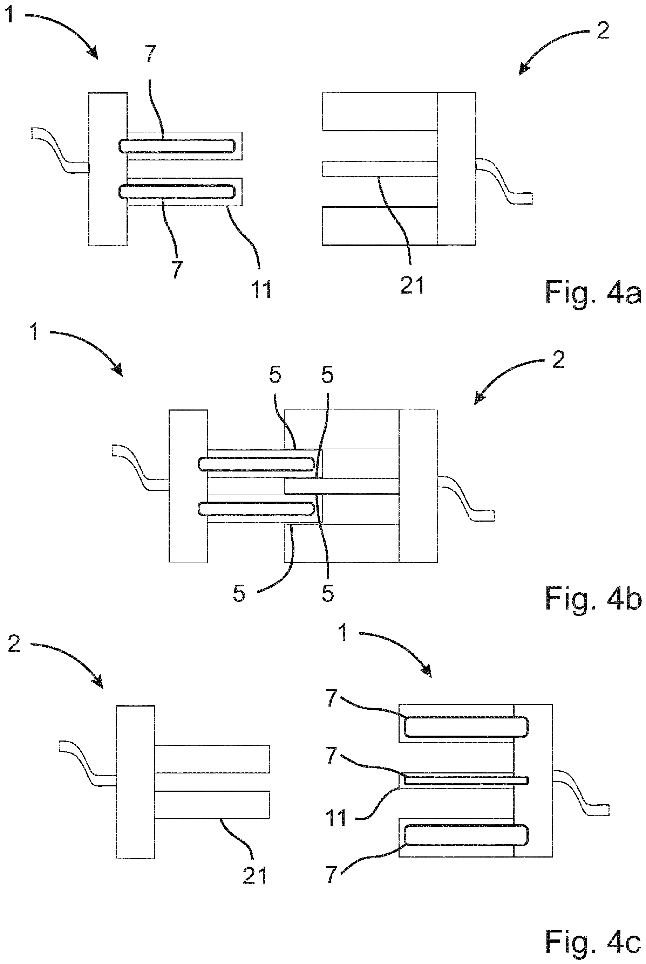

Fig. 4a schematically illustrates a connecting element 1 and a counter connecting element 2 according to an alternative embodiment in a sectional view. The connecting element 1 comprises a contact element 11 with a hollow cylindrical geometry. The wall of the hollow cylinder comprises a heat pipe 7. The counter connecting element 2 comprises a counter contact element 21. The geometry of the counter contact element 21 substantially is a hollow cylinder with an additional cylindrical pillar at the center of the hollow cylinder. The inner radius of hollow cylinder of the counter contact element 21 is substantially equal to the outer radius of the hollow cylinder of the contact element 11. The inner radius of the hollow cylinder of the contact element 11 is substantially equal to the radius of the cylindrical pillar of the counter contact element 21.

Fig 4b schematically illustrates in a sectional view the connecting element and the corresponding counter connecting element of Fig. 4a being in mechanical and electrical contact. In Fig. 4b, for illustrative purposes, the connecting element 1 is not fully inserted into the counter connecting element 2. Between the pillar of the counter contact element and the inner wall of the hollow cylinder of the contact element, contact is established in an area 5 of mechanical and electrical contact. The area 5 of mechanical and electrical contact is in a proximity to the heat pipe of the connecting element.

Fig 4c schematically illustrates a connecting element 1 and a counter connecting element 2 according to an alternative embodiment in a sectional view. The connecting element 1 comprises a contact element 11 with a hollow cylindrical geometry. In the center of the hollow cylinder, a pillar is situated. The wall of the hollow cylinder and the pillar comprise heat pipes 7. The counter connecting element 2 comprises a counter contact element 21 with a hollow cylindrical geometry that is configured to match the empty space of the hollow cylinder and pillar of the contact element 11.

## Claims

1. A connecting element (1) configured to connect a charging wire of an electric vehicle supply equipment, EVSE, to an electric vehicle, EV, comprising:
a contact element (11) configured to establish an electrical contact with a counter contact element (21) of a counter connecting element (2) for electrically connecting the charging wire (3) of the EVSE to the EV, wherein the contact element (11) is configured to carry a charging current flowing between the contact element (11) and the counter contact element (21) during charging of the EV; and
a heat pipe (7);
wherein at least a part of the heat pipe (7) is integrated into the contact element (1) so that a wall portion (17) of the heat pipe (7) carries at least part of the charging current.

2. The connecting element (1) of claim 1, wherein the connecting element (1) is a connector of the EVSE and the counter connecting element (2) is an inlet of the EV.

3. The connecting element (1) of claim 1, wherein the connecting element (1) is an inlet of the EV and the counter connecting element (2) is a connector of the EVSE.

4. The connecting element (1) of any of the preceding claims, wherein
the connecting element (1) comprises a pin (12); and
at least part of the geometry of the pin (12) is defined by the geometry of the heat pipe (7).

5. The connecting element (1) of any of the preceding claims, wherein
the contact element (11) defines an axis; and
an area (5) of mechanical and electrical contact between the heat pipe (7) and the counter contact element (21) is substantially parallel to the axis of the contact element (11).

6. The connecting element (1) of any of the preceding claims,
wherein the heat pipe (7) comprises an evaporator (14); and
wherein the evaporator (14) is configured to have a distance of at most 5 mm to the area (5) of mechanical and electrical contact.

7. The connecting element (1) of any of the preceding claims, wherein the contact element (11) and the wall portion (17) of the heat pipe (7) is one piece.

8. The connecting element (1) according to any of the preceding claims, wherein
the connecting element (1) comprises a heat sink (8) in a thermal contact with the heat pipe (7).

9. The connecting element (1) according to any of the preceding claims, wherein
the connecting element (1) comprises a thermometer (18) to measure a temperature of the heat pipe (7).

10. The connecting element (1) according to claim 9, further comprising a temperature determining unit (19),
wherein the temperature determining unit (19) is configured to determine an estimated temperature of a current-transmitting part of the heat pipe (7) from the temperature of the heat pipe (7) measured by the thermometer (18).

11. The connecting element (1) according to any of the preceding claims, wherein the heat pipe (7) is in a thermal contact with a cooling fluid.

12. The connecting element (1) according to any of the preceding claims, wherein the heat pipe (7) is configured to transmit an electrical current of at least 20 A.

13. The connecting element (1) according to any of the preceding claims, wherein the wall portion (17) of the heat pipe (7) comprises copper.

14. An electric vehicle supply equipment comprising a connecting element (1) according to any of claims 1-13.

15. A method of charging an electric vehicle, EV, using the connecting element (1) of any claims 1-13.
